Europäisches Patentamt

European Patent Office

Office européen des brevets

(11) Publication number: **0 250 986 B1**

# EUROPEAN PATENT SPECIFICATION

(45) Date of publication of patent specification: **11.12.91**   (51) Int. Cl.⁵: **G01V 3/30**

(21) Application number: **87108498.4**

(22) Date of filing: **12.06.87**

The file contains technical information submitted after the application was filed and not included in this specification

(54) **Method for constructing vertical images of anomalies in geological formations.**

(30) Priority: **16.06.86 US 874593**

(43) Date of publication of application:
**07.01.88 Bulletin  88/01**

(45) Publication of the grant of the patent:
**11.12.91 Bulletin  91/50**

(84) Designated Contracting States:
**AT BE DE FR GB**

(56) References cited:
**US-A- 4 161 687**
**US-A- 4 577 153**

(73) Proprietor: **STOLAR, INC.**
**1030 Clayton Road**
**Raton New Mexico 87740(US)**

(72) Inventor: **Stolarczyk, Larry G.**
**612 South 7th Street**
**Raton New Mexico 87740(US)**

(74) Representative: **Blumbach Weser Bergen**
**Kramer Zwirner Hoffmann Patentanwälte**
**Sonnenberger Strasse 100**
**W-6200 Wiesbaden(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a method for imaging geologic anomalies in a vertical plane in underground geological formations.

According to US-A-4,161,687, unterground anomalies or discontinuities, such as holes, tunnels, and caverns, are located by lowering an electromagnetic signal transmitting antenna down one borehole and a receiving antenna down another, the ground to be surveyed for anomalies being situated between the boreholes. Electronic transmitting and receiving equipment associated with the antennas is activated and the antennas are lowered in unison at the same rate down their respective boreholes a plurality of times, each time with the receiving antenna at a different level with respect to the transmitting antenna. The transmitted electromagnetic waves diffract at each edge of an anomaly. This causes minimal signal reception at the receiving antenna. Triangulation of the straight lines between the antennas for the depths at which the signal minimums are detected precisely locates the anomaly. Alternatively, phase shifts of the transmitted waves may be detected to locate an anomaly, the phase shift being distinctive for the waves directed at the anomaly.

By the known method, only relatively large electrical contrasts between rock and anomaly can be detected. For the method to work the wavelength of the radio waves must be not greater than twice the size of the anomaly, therefore only relatively high frequencies will suffice. High frequencies, on the other hand, do not penetrate very well the geological formation.

Cross-bore hole electromagnetic probing to locate high-contrast anomalies is known from "Geophysics", Vol.44, No.10, Oct.1979, p.1667-1676. Frequencies from 10 to 70 MHz were studied for locating high-contrast geophysical anomalies such as a tunnel. A half-wavelength in the surrounding medium should be less than or equal to the diameter of the tunnel. This means relative high frequencies which do not penetrate very well into geological formations.

Bore hole measurements of conductivity and dielectric constant in the 300 KHz to 25 MHz frequency range is known from "Radio Science", Vol.11, No.4, April 1976, p.275-283, published by the American Geophysical Union. Imaging anomalies is not intended.

In order to detect geological anomalies in underground coal seam formations it is already known (US-A-4,577,153) to place a FM transmitter in a medium frequency range of between 300 to 800 KHz with a tuned-loop antenna in the coal seam and, remote from the position of the transmitter, a FM receiver so that the tuned antennas of the receiver and transmitter are vertically arranged in the seam, exposing the seam to a plurality of transmissions of continuous wave medium frequency waves with an azimutal magnetic field component propagated horizontally through the seam from the transmitter towards the receiver, measuring a plurality of signal transmission characteristics through the seam, generating a number of data points by locating both the transmitter and receiver at several points about the seam such that for each transmitter location, the receiver is placed at a plurality of preselected points about the seam, calculating a plurality of expected signal transmission characteristics through the seam and comparing the calculated signal transmission characteristics with the measured signal transmission characteristics and generating a graphical representation of the formation therefrom.

By this method, anomalies in coal seams can be detected. This enables the production costs to be minimized by selecting the appropriate mode of mining the coal.

The invention starts from the discovery that the instrumentation known from US-A-4,577,153 for imaging structure in coal seams can be used for imaging geologic anomalies in a vertical plane in underground geological formations of general character. Whereas the method of US-A-4,577,153 was intended to examine coal seams which normally extend in horizontal direction, the invention intends to provide images for a vertical plane through geological formations which are not restricted to coal seams.

Therefore, the problem to be solved by invention is to create a method for imaging geologic anomalies in a vertical plane in underground geological formations which allows detecting faults, localized ore chutes, air or water-filled tunnels, blasting fractures, voids and other anomalies.

The solution to this problem can be found in the features of the claims.

Whereas in US-A-4,577,153 downholes are made to place the probes into the coal seam, drilling a plurality of downholes in connection with the invention means that the downholes should extend somewhat deeper than the location of the geologic anomalies so that the downholes are about the formation to be examined. Furthermore, the downholes should be remote sufficiently from each other.

Whereas in US-A-4,577,153 a medium frequency range of between approximately 300 to 800 KHz has been considered, according to invention the useful frequency range is somewhat broader from approximately 100 to 800 KHz.

Whereas in US-A-4,577,153 the different transmitter stations were in the same coal seam, with the invention the elevation of the transmitter is successively changed to get said different transmitter stations.

Coal seams are bound by rock which generally show a higher conductivity than coal so that the electromagnetic waves are bound within the coal seam. Such conditions are not met generally in geological formations. With the invention therefore some spherical spreading of the transmitted waves is intended and numerous readings of the anomaly with the azimuthal magnetic field component are made.

It is an advantage of the present invention that graphical representation of geological formation anomalies are developed by the imaging technique.

It is an advantage of the present invention that vertical scanning can be accomplished to establish a vertical image of the geological area under study.

It is another advantage of the present invention that production costs can be minimized by selecting the appropriate mode of mining.

It is a further advantage of the present invention that the imaging can be carried out using a minimum of equipment and a minimum of boreholes.

It is a further advantage of the present invention that imaging can be accomplished using a relatively low transmitter power.

It is a further advantage of the present invention that mining safety can be improved through the detection of geological anomalies in the working phase.

It is yet another advantage that partial washouts caused by fluvial channel sand scour can be detected by the present invention.

It is a further advantage that roof/floor rock conditions can be determined by the present invention.

It is yet another advantage of the present invention that the instrumentation can be used to communicate with trapped miners, thus increasing mining safety.

It is a further advantage that coal seam fire headings can be determined with the present invention.

These and other objects and advantages of the present invention will no doubt become obvious to those of oridinary skill in the art after having read the following detailed description of the preferred embodiments as illustrated in the various drawing figures.

IN THE DRAWINGS

Fig. 1 is a front elevational view of an in-seam receiver for use in the present invention;

Fig. 2 is a front elevational view of an in-seam transmitter for use in the present invention;

Fig. 3 is a partial cut-away view of a downhole probe for use with the present invention;

Fig. 3a is a front elevational view of a downhole probe fitted with a borehole probe centralizer;

Fig. 4 is a schematic representation of the modular components of the downhole receiver and transmitter probes of Fig. 3;

Fig. 5 is an idealized cut-away view of a coal seam showing the location of the transmitter of Fig. 2 and receiver of Fig. 1 for in-seam tomography;

Fig. 6 is an idealized cut-away view of a coal seam showing boreholes adjacent to the coal seam with downhole probes and surface equipment in position;

Fig. 7 illustrates a tunnel study area of a geological formation wherein the receiver communicates with transmitters from two different locations;

Fig. 8 is a graphical reading of measured field signal strength versus radial distance from radiating antenna;

Fig. 9 is a diagrammable illustration of vertical imaging for a geological formation;

Figs. 10A and 10B illustrate vertical RIM cross-hole survey results with Fig. 10A illustrating the tomography phase constant versus frequency and Fig. 10B an attenuation rate isopach map;

Fig. 11 graphically illustrates electrical parameters of various materials; and

Fig. 12 is a diagrammatical illustration of applying the present invention for detection of petroleum products.

DESCRIPTION OF THE PREFERRED EMBODIMENT

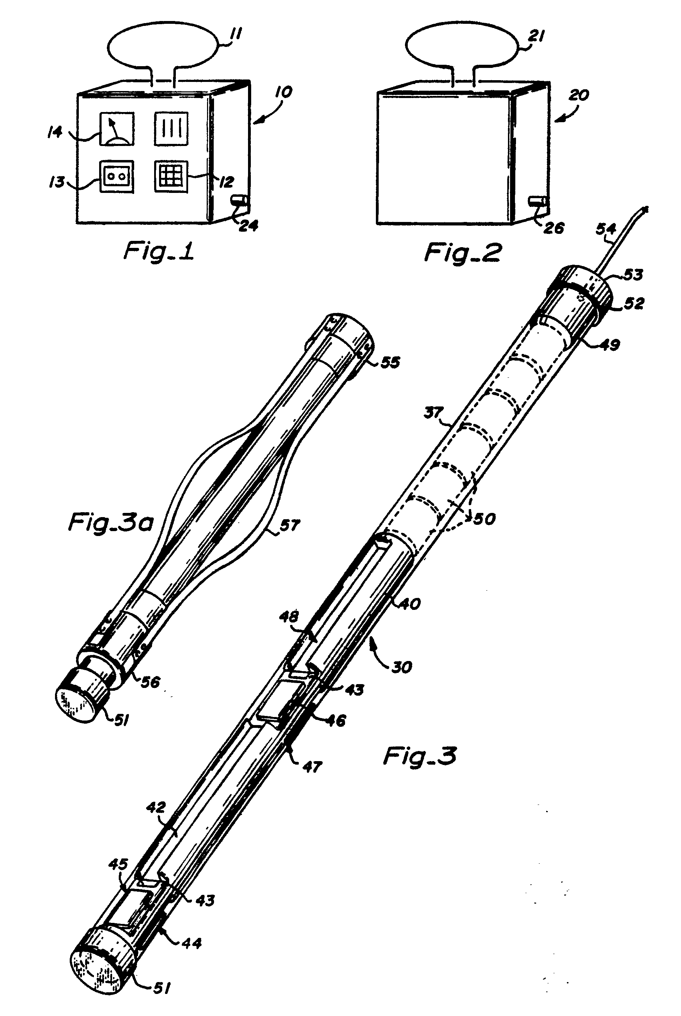

Fig. 1 illustrates a portable continuous wave low and medium frequency (CWLMF) receiver for in-seam tomographic imaging. As used herein, tomography is a generic term to denote an electromagnetic process of imaging structure in a coal seam using low and medium frequency (LMF) signals. The imaging process may or may not use the tomography algorithm. The receiver is designated by the general reference character 10 and is of the single conversion, superhetrodyne type with a frequency range of 100 to 800 kHz, tunable in five kHz increments. Receiver 10 is designed to automatically measure field strength of a

3

transmitted signal, and to convert this measured field strength into a digital signal for subsequent data processing. Receiver 10 includes a tuned loop antenna 11, a distance logging keyboard 12, a magnetic tape recorder 13 and a field strength display 14.

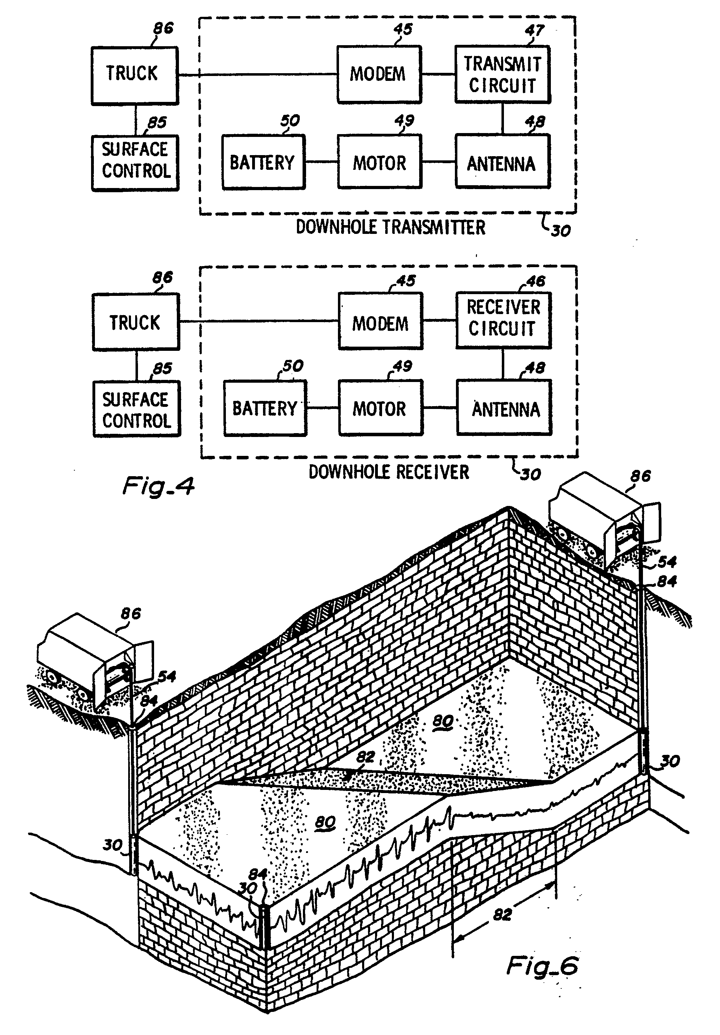

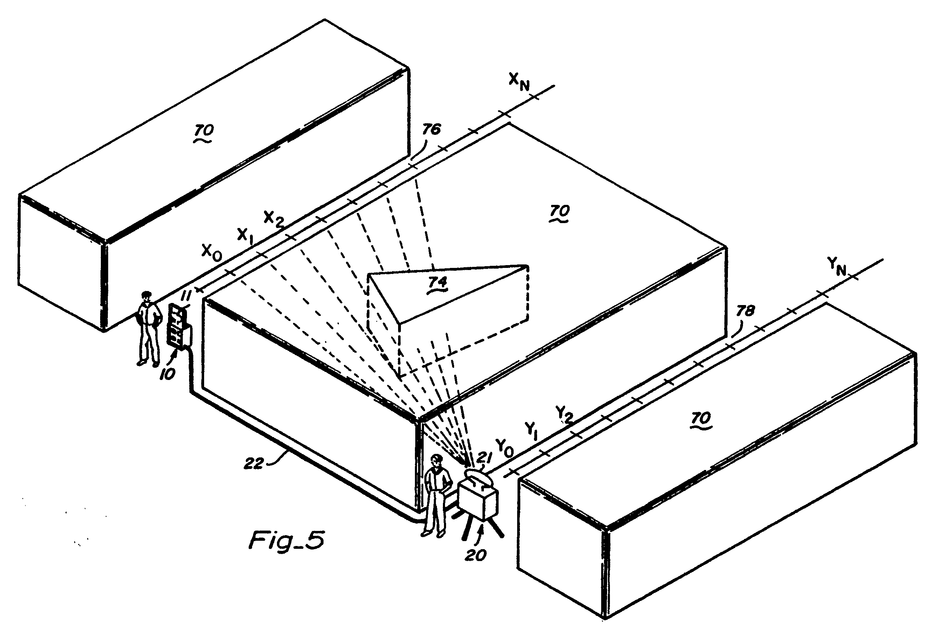

Fig. 2 illustrates a continuous wave low and medium frequency transmitter referred to by the general reference character 20. The transmitter 20 is a class B transmitter with a frequency range of 100 to 800 kHz, tunable in five kHz increments. The output power of transmitter 20 is twenty watts. This is sufficient to provide a range of at least 470 m (1550 ft) at 520 kHz, depending on the medium. Transmitter 20 is equipped with a tuned loop antenna 21. The transmitter 20 and receiver 10 are constructed in a configuration adaptable for in-seam use as later described herein and illustrated in Fig. 4. In addition to the continuous wave signal capability of receiver 10 and transmitter 20, the transmitter 20 is further designed to generate and transmit narrowband frequency modulation (FM) signals, and the receiver 10 is further designed to receive narrowband FM signals and to demodulate those signals. This capability allows for phase shift measurements which yields additional useful data in detecting and imaging the geological anomalies. For such measurements, a reference signal must be sent from the transmitter 20 to the receiver 10. This signal is sent through fiber optics cable 22 as shown in Fig. 5. Fiber optics cable 22 is coupled to receiver 10 through reference cable connector 24, and is coupled to transmitter 20 through connector 26.

In-seam imaging requires access immediately adjacent the coal seam. In situations where the head and tail gate entries have not been cut, as in the case of advancing longwall mining, or where the bed is moderately shallow with good surface drilling characteristics, surface based imaging employing downhole probes can be used. Fig. 3 illustrates the general configuration of a downhole probe, or sonde and referred to by the general reference character 30. The probe 30 is of a cylindrical configuration for insertion down a standard size borehole. Probe 30 includes an outer hollow structural cylinder 37 of a diameter of about two and one-quarter inches. Cylinder 37 may be constructed of a variety of materials, and in the preferred embodiment is of a radiolucent material such as fiberglass. Rotatably mounted within cylinder 37 is a support frame 40. Support frame 40 is a solid cylinder with a longitudinal trough 42 ending at a pair of opposing flat faces 43. Mounted on each of the flat faces 43 is a modular circuit board including antenna heading control 44, modem 45 and either a receiver 46 or a transmitter 47, depending on whether receive or transmit capability is desired of the probe. Located in longitudinal trough 42 are conductors of a tuned loop antenna 48. Because of the directional nature of the radio transmissions through tuned loop antenna 48, means must be provided to mechanically orient the respective antennas of the receiver and transmitter probes to a co-planar alignment. This is accomplished by rotating the frame 40 within the outer cylinder 37 by means of a drive motor 49. Drive motor 49 is fixed to the proximal end of cylinder 37 and mechanically coupled to frame 40 whereby frame 40 can be rotated through a full 360° within the cylinder 37. In the preferred embodiment, power to drive motor 49 is supplied by six nickel-cadmium batteries 50 fixed to the proximal end of support frame 40, just below drive motor 49. AC power could also be supplied downhole and rectified at the probe to create the required DC voltage from the probe circuitry. Cylinder 37 is sealed at its distal end by an end cap 51 and at its proximal end by an end cap 52. End cap 52 contains a standard four pin socket 53 into which is plugged a cable 54. Cable 54 is the means by which the probe 30 is connected to surface equipment and through which data is sent for the imaging process. Electronic surface equipment for downhole receiver 30 comprises a signal strength display/recorder, a modem, and a radio transmitter/receiver for sending a reference signal between probes when the probes are operated in the FM mode.

To ensure that the probe is centrally located within the borehole, a borehole probe centralizer is fitted to the probe as shown in Fig. 3a. This centralizer includes a proximal end cap 55 which is attached ot the probe proximal end cap 52. End cap 55 has a central aperture through which cable 54 may pass. Sleeve 56 fits snugly around the distal end of outer cylinder 40 of probe 30. Attached to both end cap 55 and sleeve 56 are three to four bands 57. These bands 57 are of a strong flexible material such as thin stainless steel. The bands 57 are prestressed to curve convexly outward to contact the inside walls of the borehole. The bands 57 are sufficiently flexible to urge the probe 30 into the borehole's center, and to allow for easy passage of the probe down the borehole.

The preferred embodiment contemplates modular design of the components of both the downhole probes 30 and the in-seam instruments 10 and 20. In this way, cost of production is reduced and repair and servicing is simplified. Fig. 4 is a general block diagram of the components, showing the modular design. The probe 30 can be equipped as transmitter 31 or receiver 32.

Table 1 is an equipment identification chart identifying the modular components and Table 2 is a configuration matrix showing the composition of each downhole probe 30 and in-seam instrument 10 and 20.

TABLE 1

| Module | Identification |
|---|---|
| A1 | Receiver |
| A3 | Transmitter |
| A10 | C$^3$ Modem |
| A13 | Display/Recorder |
| B6 | NiCad Battery Tuned Loop Antenna Enclosures |
| C1 | Downhole |
| C2 | Porthole |

## TABLE 2

### CONFIGURATION MATRIX

| Instrument | A1 | A3 | A10 | A13 | B6 | C1 | C2 |
|---|---|---|---|---|---|---|---|
| Downhole 30 | | | | | | | |
| Transmitter | | 1 | 1 | | 1 | 1 | |
| Receiver | 1 | | 1 | | 1 | 1 | |
| Surface | | | 1 | 1 | | | |
| In-seam | | | | | | | |
| (10 or 20) | | | | | | | |
| Transmitter | | 1 | | | 1 | | 1 |
| Receiver 10 | 1 | | | 1 | 1 | | 1 |

Examples of equipment specifications are shown in the following Tables 3-7. Table 3 describes the general system operating parameters. Tables 4 and 5 illustrate the transmitter and receiver specifications, respectively. Table 6 dscribes the transmitter and receiver antenna characteristics and Table 7 gives the specifications for the modem.

## TABLE 3

### SYSTEM SPECIFICATIONS

__Signal Emissions:__

| | |
|---|---|
| Type | CW and Narrowband FM |
| Frequency Range | 100 to 800 kHz |
| Tuning | 5 kHz Increments |
| Peak Deviation | 100 Hz |

__Modulation:__

| | |
|---|---|
| Frequency Range | 200 Hz |

__Environmental:__

| | |
|---|---|
| Operating Temperature | -40 to 80 Degrees C |
| Probe | 35 bars (500 PSI) |

## TABLE 4

### TRANSMITTER

| | |
|---|---|
| Type | Complimentary Class B |
| Module Description | A3 |
| Frequency Range | 100 to 800 kHz |
| Tuning | 5 kHz Increments |
| Output Power | 20 Watts |
| Flatness | $\pm$ 1/2 DB |
| RF Load Impedance | 50 and 200 Ohms |
| VSWR  3:1 Max | |
| Mixer Oscillator | 10.7 MHz |
| Signal Oscillator | 100 Hz |
| Power Requirements | |
| Operating Voltage | 9 to 15 Volts DC |
| Demand Current | 3.5 Amperes |
| Connectors | |
| Type | Molex |
| Output Power | 2 |
| VCC | 1 |
| Ground | 1 |
| Fiber Optics Cable (Reference) | 1 |

### TABLE 5
### RECEIVER

| | |
|---|---|
| Type | Single Conversion Superhetrodyne |
| Module Description | Al |
| Frequency Range | 100 to 800 kHz |
| Tuning | 5 kHz Increments |
| IF Frequency | 10.7 MHz |
| Source Impedance | 50 Ohms |
| Sensitivity | 0.1 Microvolts for 12dB Sinad |
| IF Frequency | 10.7 MHz |
| Selectivity | |
| 3 dB BW | 200 Hz Min |
| 70 dB BW | 1 kHz |
| Audio | |
| Squelched | 50 dB Min |
| Unsquelched | 30 dB (100 UV) |
| Load 8 Ohms | |
| Frequency Response | |
| 3 dB | 10, 70, 100 Hz |
| Voltmeter | |
| Type | Synchronized with transmitter local oscillator |
| Range | 0 to 360 degrees |

### TABLE 6
### ANTENNA

| | |
|---|---|
| Type | Tuned Loop Antenna |
| Frequency Range | 100 to 800 kHz |
| Number of Turns | 11 |
| Magnetic Moment | |
| Downhole | 8 $ATM^2$ @ 20W |
| Portable | 8 $ATM^2$ @ 20W |
| Heading | |
| Type | Flux Gate Compass (Downhole) |

### TABLE 7
### $C^3$ MODEM

| | |
|---|---|
| Type | Manchester Code Format 1b Bit Code |
| Function | |
| Power | On/Off |
| Antenna Position | ± 30 of Command |

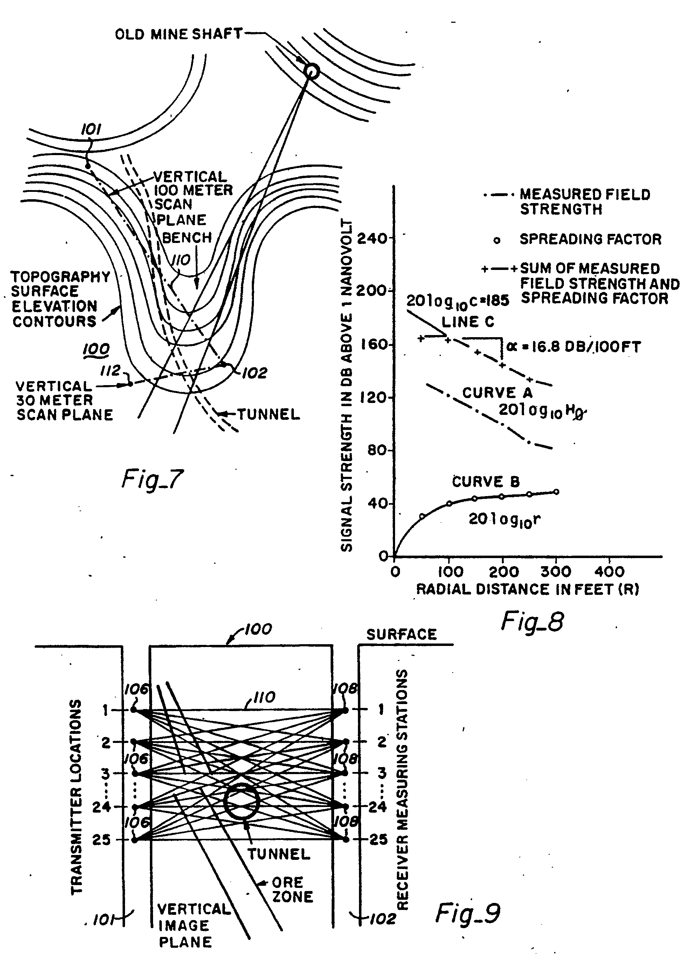

Where there is no immediate access to the coal seam, surface imaging is performed using the downhole probes 30 inserted into a series of boreholes around the seam's perimeter. This procedure is represented in Fig. 6.

Imaging of the seam is based upon the differential conductivity of coal and the anomalous structure. The conductivity of rock is several orders of magnitude greater than the conductivity of coal. The vertical orientation of the transmitting tuned loop antenna produces a horizontal magnetic field $H_\phi$ and a vertical electrical field $E_Z$. These fields are almost constant over the height of the coal seam. At large radial distances from the antenna, the fields decay exponentially at a rate determined by an effective attenuation constant ($\alpha$) which depends on losses both in the coal and in the rock, and on the dielectric constant of the coal. The attentuation rate is expected to increase as the coal seam thickness decreases, coal seam conductivity increases, and the relative dielectric constant increases. The attenuation rate decreases as the rock conductivity increases. The rate also depends upon frequency of the transmitted signals, and on water content of the seam. Measured results be Emilie and Lagace indicate an attentuation rate in coal of appr. 0.133 dB/m = 4 dB/100 feet. This forms the basis for the coal seam continuity imaging method.

The tuned loop antennas excite the natural low loss coal seam mode signal in accordance with the following equation (1):

$$H_\phi = \vec{M}\ f\ (r \alpha h \epsilon_c \epsilon_r \sigma_c\ \sigma_r) \qquad (1)$$

where M is the magnetic moment of the transmit antenna, r is the range from the transmitter to the receiver antennas, $\alpha$ is an attenuation constant, h equals the seam height, $\epsilon_c$ and $\epsilon_r$ are the seam and rock permitivities respectfully, and $\sigma_c$ and $\sigma_r$ are the seam and rock conductivities.

The magnetic moment M is itself dependant on transmit power $P_o$, and bandwidth BW as represented by equation (2):

$$M = C\sqrt{\frac{P_o}{BW}} \qquad (2)$$

Together, these equations indicate that the tuned loop antennas will excite the natural coal seam mode magnetic moment and thus provide the highest magnetic moment resulting in the longest range. Narrow system bandwidth also leads to improved receiver sensitivity $S_{dB}^{10}$ for a 10 dB IF signal-to-noise ratio is given by equation (3):

$$S_{dB}^{10} = -164 + 10 Log_{10} BW_{IF} + 10 Log_{10} NF$$

where $BW_{IF}$ is the IF bandwidth of the signals and NF is the noise figure at the receiver.

Equation 3 thus shows that the sensitivity increases as bandwidth decreases. The results of equations (1), (2) and (3) indicate that continuous wave LMF signals are optimum for the geophysical survey instruments. This is because their narrow bandwidth results in signal propagation in coal with the lowest attenuation rate (Equation 3) and highest magnetic moment (Equations 1 and 2). The net result is that the operating range of the instruments is maximized at a specified output power.

The imaging method is dependent on a comparison of the calculated signal strength with the measured signals strength as determined by the CWLMF instruments. An analysis of the calculated signal strength is helpful to understanding of the method. To provide a baseline reading for the imaging method, Equation (1), previously referred to, is used to calculate the expected signal strength in a particular coal seam. This is accomplished by measuring the various parameters at the particular seam and applying these results to Equation (1).

The propagated signal is received in the far side receiver. Because of either an increase in the "effective" seam conductivity or a decrease in height of the seam, wave propagation along a faulted seam path will result in greater attenuation rate. Thus, by comparing the level of a number of received signals, path anomalies can be detected. Additionally, the refractive index of LMF signals varies slowly in pure coal, thus the signals travel on a straight line path. Propagation in coal takes the form of a parallel plane, transverse electromagnetic (TEM) transmission-line type mode, with the electric field vertical and the magnetic field horizontal within a planar seam bounded above and below by more conductive rock. Seam anomalies such as rock have a different refractive index than coal, thereby deflecting the signal path to a greater degree. The narrowband-FM signals allow for measurement of this path attenuation, thus providing a second means of detecting anomalies. Finally, phase shift of the FM signal along the path also indicates the presence of anomalous formations within the seam.

When greater resolution is desired tomographic, rather than continuity imaging techniques are employed. Tomography results in high resolution by employing the lowest attenuation rate frequency and making more frequent spatial measurements. The attenuation rates are measured at each spatial orientation of transmitter and receiver and the resulting data points are analyzed using computer aided imaging techniques to yield a pictorial representation of the anomaly.

To obtain good resolution, the distance between the transmitter and receiver should be greater than $\lambda_c/2\pi$ where $\lambda_c$ is the signal wavelength in coal. Thus, for the 520 kHz transmission frequency of the preferred embodiment, the wavelength in coal is 97.7 meters. This yields a minimum separation distance of 15.56 meters.

The in-seam tomographic imaging method as illustrated in Fig. 5, accordingly is carried out with portable entry receiver 10 and transmitter 20 in a manner determined to maximize resolution. Tuned loop (short magnetic dipole) antenna 21 of transmitter 20 is designed to excite the natural coal seam mode azimuthal magnetic field component ($H_\phi$), at a preselected wavelength in the 100 - 800 kHz range, thus providing the highest field strength at a given power output. Receiver tuned loop antenna 11 is placed in a co-planar alignment with transmitter antenna 21 to ensure maximum field strength. The instruments are separated by a distance of more than 15.56 meters for maximum resolution. In the preferred embodiment, a coal seam is 600 feet (200 meters) wide, thus ensuring adequate separation. It can be seen that a coal seam 70 contains within it a rock/sand barrier 74. This rock/sand barrier 74 will act as a radiogenic mass and cause an attenuation in the transmitted signal. Because tomography employs the lowest attenuation rate signal frequency allowing for minimization of the transmitter output power, it is important that the head and tail gate entries do not include continuous electrical conductors. Such conductors create secondary magnetic fields that would interfere with received signal level measurements. To obtain adequate resolution in the tomographic in-seam survey a number of data must be collected by taking spatial measurements. The procedure is thus carried out by making a series of received signal level measurements at specific locations (designated as $X_0$, $X_1$...$X_n$) in the tail gate entry 76 for each transmitter location in the head gate entry 78. Similarly, the transmitter 20 is placed in a series of specific locations (designate as $Y_0$, $Y_1$...$Y_n$) within the head gate entry 78 and the receiver 10 is placed at the corresponding locations in the tail gate entry 76. At each receiver location in the entry way distance logging keyboard 12 is used to enter coordinates representing the receiver's position relative to the transmitter. These coordinates are converted to digital signals and stored, along with the measured receive signal values, on the magnetic tape. In reconstructing the data, the signal strength measurements can be thus corrected for positional changes of the transmitter and receiver. The longitudinal spacing of transmitter and receiver locations is determined by the required image resolution. The resultant received signal data is converted to digital form and stored on the cassette tape 13 of receiver 10 and can be analyzed in a computer based tomography algorithm. Such computer aided imaging algorithms will provide a detailed picture of the seam structure. Computer generated data may also include a print-out of seam parameters (conductivity, ash content, etc.) and a digital tape for use by the mines' computer graphics terminal.

Surface based seam imaging equipment is deployed as shown in Fig. 6. The coal seam to be imaged is represented by general reference character 80. It can be seen that a fault 82 is present within the seam. In employing the surface base imaging procedure using a perimeter exploration protocol a plurality of drill holes 84 are drilled along the perimeter of the longwall panels. In the preferred embodiment two adjacent longwall panels, of a combined width of 400 m (1200ft.) and a length of 2000 m (6000 ft.) can be imaged with a ten-hole drilling plan. Such a drilling plan will detect seam anomalies within the panels. If a fault is detected in the panel a convergent search strategy is required to determine its heading. Such a search strategy is carried out by drilling bisecting boreholes within the perimeter to localize the fault. Surface imaging of the coal seam is accomplished in a manner similar to the in-seam imaging procedure. After the series of drill holes have been bored around the perimeter of the longwall panel, the surface probes 30 are inserted down the boreholes 84 to the depth of the coal seam which has been determined from the core samples. Fig. 6 illustrates a vertical displacement fault which results in one end of the coal seam being deeper than the other. Because the signals tend to propagate through the coal, the receiver probe 30 is placed within the coal seam and not necessarily at the same depth as the transmitter probe 30. Downhole probes 30, comprising a receiver probe and a transmitter probe are inserted in opposite drill holes 84. Receiver and transmitter antenna segments 48 are aligned in a co-planar manner by means of drive motors 49 located in the end of downhole probes 30. Antenna headings are determined and controlled through the use of surface control units including telemetry and control equipment and a modem. These units, together with the probe control equipment and cabling, are mounted in trucks 86. Continuous wave or FM low and medium frequency transmissions are made in a manner similar to those made in the in-seam imaging procedure and attenuation rate and/or phase shift are measured. The process is repeated with the receiver probe 30 and transmitter probe 30 in each of the boreholes 84.

This surface procedure may also be carried out from an underground surface. This situation occurs when a lower coal seam is being explored from an existing mined seam. The existing seam floor then becomes the surface into which boreholes are drilled for exploration of the lower seam. The downhole probes 30 are inserted into the boreholes and measurements taken in the normal surface exploration manner.

The resultant continuity data is analyzed to determine if areas of increased attenuation are present. Such areas indicate fault zones or other geological anomalies. If sufficient boreholes are drilled, the data can be analyzed using computer-aided tomographic imaging techniques to yield a pictorial result as with the in-seam procedure.

Additionally, floor/roof rock characteristics can be determined using continuous wave medium frequency continuity measurements. This procedure is analogous to the downhole seam continuity measurements except the receiver and transmitter probes 30 are positioned above the coal seam ceiling to measure roof conditions. The signals are thus propagated through the surrounding rock, and signal attenuation is measured. In this way, a determination respecting the type of rock and resulting roof/floor conditions can be made.

Vertical imaging wherein attenuation rates are measured in vertical plane is also an important capability. Imaging is accomplished by determining the complex propagation factor (attenuation rate) of an electromagnetic wave along straight ray paths in the geologic study zone. The attenuation rate depends on electrical properties (permitivity, permeability, and conductivity) of the transmission medium. The attenuation rate is theoretically known in a homogeneous medium and the attentuation rate is known to change in zones of geologic disturbances. It is also known that the attentuation rate increases in fault zones where chemical mineralization has resulted in localized ore chutes of increased conductivity or it increases in water filled tunnels. The attenuation rate decreases in zones intersected by air filled tunnels, and in zones where geologic disturbances caused by mine tunnel blasting fractures adjacent rock structures.

The radio imaging method of the present invention allows for evaluation of geological structure in the vertical plane. Chemically mineralized ore zones and tunnels intersecting the imaging plane, may be graphically reconstructed using the method of this invention with available tomography algorithms. For example, where there is a tunnel in the geological structure, a restructured image shows that hallows of geologic disturbances can be detected in the rock surrounding the tunnel. In such an environment a plurality of drill holes may be positioned. Then a downhole radio transmitter is placed in one drill hole and a downhole radio receiver is placed in a second drill hole. Each hole shall have a number of measuring stations, e.g. twenty-five, each at a different vertical elevation. Using twenty-five measuring stations in each drill hole, as an example, 625 receiver measurements may be taken and used to determine average attenuation rate along paths between the downhole transmitter and downhole receiver at each location. The data may then be compiled and analyzed in a computerized tomography algorithm which in turn determines the attentuation rate in each of the 625 cells which cover the entire vertical image plane.

The vertical evaluation of a geological structure will reveal the image of anomalies, e.g. tunnels, voids and chemically mineralized ore zones, etc. Experimentation has shown that a correct model of the electromagnetic wave imaging signal propagating along a straight ray path is predominantly a plane wave exhibiting spherical spreading. The magnetic field component of the electromagnetic (EM) quasi plane wave is mathematically:

$$H_g = \frac{ce^{-\alpha r}}{r} \qquad (3)$$

where r is the radial distance from the source (feet);
$\alpha$ is the attenuation rate in dB per hundred feet; and
c is a constant.

In conducting experimentation, receiver measurements were made along the centerline of the tunnel shown in Fig. 1. When the transmitter was located in a select borehole, the measured data is shown in Fig.

8, the average attenuation rate in an underground tunnel was 0.56 dB/m (16.8 dB/100 ft.) which is near the theoretical rate of 0.62 dB/m (18.6 dB per 100 ft.). The "c" factor was found by the analytical construction in Fig. 8 to have a value of 185. Experiments were conducted with an image frequency of 300 kHz exhibiting a wavelength of 102 m (305.7 Feet) in the schist medium. Since the wavelength is much greater than the diameter of the drillhole and tunnel, propagation disturbances from reflection mechanisms are minimized. Also, the tunnel cut-off frequency is approximately 22 MHz thereby negating tunnel wave propagation with potential resulting measurements interference problems. After correcting the measured data $20\log_{10}H_\phi$, (see curve A of Fig. 8), for the effects of spherical spreading, $20\log_{10}r$, (see curve B of Fig. 8), the resulting line C is of slope which is the attenuation rate of the EM wave in the schist medium. Thus, the existence of the tunnel was helpful in determining the nature of wave propagation in the semi-homogenous medium.

Figs. 7 and 9 diagrammatically illustrates a vertical imaging plane set-up for a geological formation referred to by the general reference character 100. Drill holes 101 and 102 are drilled at different locations in the geological formation 100. These holes establish the vertical edges of the reconstructed image. Within the downhole 101 is positioned a plurality of downhole transmitter location stations 106 and in the down hole 102 is positioned a plurality of downhole receiver measuring stations 108. There are a plurality of transmitter stations, e.g. Fig. 9 illustrates twenty-five each thereby allowing for 625 readings. In collecting the data the downhole transmitter 30 is first positioned at the first station 106 within drillhole 101 and the downhole receiver at the first receiver station 108 in drillhole 102. At these locations, an imaging signal is sent from the transmitter location 106 to the receiver measuring station 108 where its level or phase is measured. Then, downhole receiver station is moved to the second receiver station 108 in drillhole 102 and the measurement is repeated. The process is repeated for each other receiver station 3-25 in downhole 102. Then, the downhole transmitter is moved to transmitter station 2 in drillhole 101 and data is accumulated for each of receiver stations 1-25 in drillhole 102. Then, the downhole transmitter is successively positioned at transmitter stations 3-25 within drillhole 101 and the process is repeated. For illustrative purposes in Fig. 9, straight ray paths 110 of the EM signals are illustrated as projecting from each of the transmitter location 106 to the multiple receiver stations 108. For example, each transmitter location establishes and EM ray pattern 110 to each receiver station.

In conducting a survey, after all measurements are compiled between a pair of drillholes, then the downhole transmitter 106 may be moved to another drillhole. To illustrate, Fig. 7 illustrates a tunnel study area within the geological study area 100, with drillholes 101 and 102 illustrated. After the images are compiled between drillholes 101 and 102, which may be separated by 100 meters, the downhole transmitter may be moved to a drillhole 112 and the image planes comprising ray paths 110 again established between drillholes 112 and 102, which may be separated by 30 meters or more. The vertical distance and positioning of the transmitter stations and receiver stations within the drillholes 101, 102 and 112 should preferably be accurately known. This can be achieved by using a wireline winch measuring equipment, so that the vertical distance from the top flange of the cased drillholes 101, 102, 112, etc. to each measuring station is accurately determined.

In carrying out the method, a receiver may be lowered to a specified depth designated as the starting measuring station 108 near the top of the drillhole 102. A companion downhole transmitter is lowered in a corresponding station 106 in downhole 102 or 112. From each transmitter station 106, a radiating antenna is placed in a vertical plane and excites electromagnetic (EM) wave propagation on the ray paths 110 as illustrated in Fig. 9. The antenna is a small magnetic dipole which forms a tuned resonant loop in a vertical plane. Likewise, the receiver has a small magnetic dipole antenna with a resonant loop in a vertical plane.

With the tuned resonant loop antenna the transmitter produces a horizontal magnetic field component which is received by a companion tuned loop antenna at the receiver station. The magnetic field components of the ray paths 110 intersect a receiving tuned resonant loop antenna inducing an electromotive force (EMF) voltage that is measured by the receiver in the drillhole 102. This voltage value is within the calibration factor of the actual magnetic field component value. The voltage may be extremely small and measured (recorded) with respect to decibels above one nanovolt. As the EM wave travels along every radial ray path from the downhole transmitter to the downhole receiver, it reacts with the medium causing a measurable loss of energy. As a result, the strength of the magnetic field component decays with distance along the path. Along the path (farfield), the predominate magnetic field ($H_\phi$) component is mathematically given by:

$$H_\phi = c\, \frac{e^{-\alpha r}}{r} \tag{4}$$

The decay in the magnetic field component is in part due to the spherical spreading of the wave as it propagates away from the electrically short magnetic dipole antenna. The spherical spreading is represented by the first power of radial distance (r) from the radiating antenna in the denominator of equation 4. The constant c depends upon the magnetic moment of the radiating antenna which is given by:

$$\vec{M} = NIA \approx K\sqrt{\frac{P_o}{BW}} \qquad (5)$$

where K is the area constant of the loop antenna;
N is the number of turns in the loop antenna;
I is the peak current circulating in the loop antenna; and
A is the area of the antenna.

The right hand term in equation 5 expresses the dependence of moment (M) on transmitter power ($P_o$) and antenna bandwidth (BW). A ten fold increase in transmitter power increases the magnetic moment by 10 dB. The constant c in equation 4 is dependent upon the conductivity (r) of the medium 100. The decay along the path is also strongly dependent upon the attenuation rate ($\alpha$) of the EM signal in the medium 100. The attenuation rate of a plane wave is mathematically represented by:

$$\alpha = \omega \left[ \frac{\mu_o \epsilon}{2} \left( \sqrt{1 + \left(\frac{\sigma}{\epsilon\omega}\right)^2} - 1 \right) \right]^{\frac{1}{2}} \qquad (6)$$

where $\omega$ is the radian frequency of the RIM signal;
$\mu_o$ is the magnetic permeability of the medium 100 (e.g. $4\pi \times 10^{-7}$ for non-magnetic rock);
$\epsilon = \epsilon_r \epsilon_0$ is the dielectric constant of the medium 100
$\epsilon_r = 10$ for schist rock);

$$\epsilon_o = \frac{1}{36\pi \times 10^{-9}};$$

and
$\sigma$ is the conductivity ($Sm^{-1}$ or mho/m) of the medium 100.

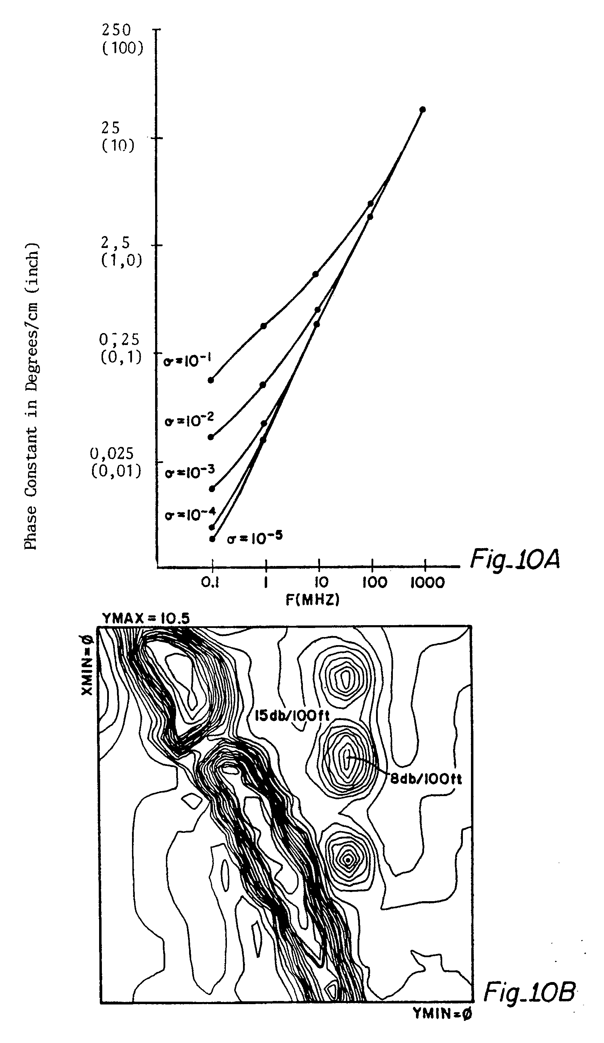

For each downhole receiver location 108, the signal at each end of the ray paths 110 from the radiating loop antenna is measured and recorded in dB above one nanovolt. The measured data is then compiled and anaylzed in a computerized tomography algorithm. As illustrated in Fig. 10A, the phase constant depends upon the conductivity (S or mhos per meter) of the media. Below 300KHz the phase constant is very sensitive to the conductivity of the media. The tomography algorithm determines the attenuation rate in the vertical survey planes shown in Fig. 10B.

The attenuation rate data is used in a contouring program to draw contours of constant attenuation in the plane of the image, in increments of 0.3 dB/m (1 dB per 100 feet. The contour lines reconstruct the image of the geologic structure as illustrated in the isopach map of Fig. 10B. The image cells may be 5 ft. x 3.9 ft. and 5 ft. x 13 ft. in the 30 and 100 meters scans, respectively. Figure 10B illustrates the contours of constant attentuation for the ore zone on the left side of the image and three tunnels, one over the other, are shown on the right.

It may be useful to briefly describe some aspects of the electromagnetic wave propagation theory in a slightly conducting medium. The EM radiating antenna is an electrically short magnetic dipole. The magnetic dipole antenna produces a farfield toroidal antenna pattern and the plane of the physical antenna lies in the x-y plane. The magnetic moment vector ($\vec{M}$) is normal to the plane of the physical antenna coincident with the z axis. The antenna produces a radial magnetic field component ($H_r$), an azimuthal magnetic field component ($H_\phi$) and an electric field component ($E_\theta$). In free space the field equations are

given by:

$$H_{\phi} = \frac{Mk^3}{4\pi}\left[\frac{1}{(kr)^3} - \frac{1}{j(kr)^2} - \frac{1}{kr}\right] e^{-jkr} \sin\theta \qquad (7)$$

$$H_r = \frac{Mk^3}{2\pi}\left[\frac{1}{(kr)^3} - \frac{1}{j(kr)^2}\right] e^{-jkr} \cos\theta \qquad (8)$$

$$E_{\theta} = \frac{Mk^3}{4\pi}\left[\frac{u}{\epsilon}\right]^{1/2}\left[-\frac{1}{kr} - \frac{1}{j(kr)^2}\right] e^{-jkr} \sin\theta \qquad (9)$$

where
$k = \beta - j\alpha$ (i. e. $k$ = the complex wave number);
$\beta$ is the phase constant in radians/meter; and
$\alpha$ is the attenuation rate in nepers/meter.

As r becomes large, the terms involving $r^{-1}$ become predominate and the farfield magnetic field terms follows from equation 7 as:

$$H_{\phi} = \left[\frac{Mk^2}{4\pi}\right]\frac{e^{-\alpha r}}{r} \; ; \; \theta = 90° \qquad (10)$$

The bracket term mathematically represents the constant term in equation (4).

In the near vicinity of the borehole antenna, the predominate magnetic field terms are magnetic. Therefore, the antenna near field energy is stored in its magnetic fields. By way of contrast, if the antenna structure was a short electric dipole, the dual of equations 7 through 9 would mathematically define the near field components $E_{\phi}$, $E_r$ and $H_{\theta}$. The electric field terms $E_{\phi}$ and $E_r$ would dominate. These terms would cause a current density $J = \sigma E$ to flow in the medium in close proximity to the antenna causing a substantial dissipation loss of energy thereby resulting in a very short unacceptable imaging system. We thereby see the advantage of using the short magnetic dipole antenna in subterranean imaging.

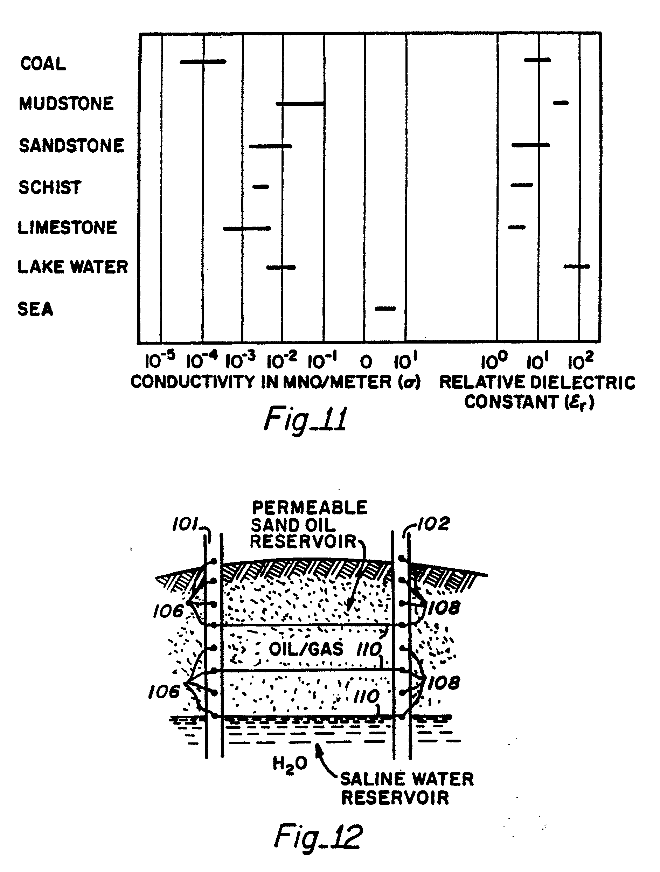

Fig. 11 illustrates the range of electrical property values of a typical geological material expected with an imaging frequency of 300KHz. For comparison purposes, the attenuation rate ($\alpha$) of a plane EM wave in the lake water, schist, and coal mediums were calculated from Equation 6 and illustated in Table A.

TABLE A

| PLANE EM WAVE ATTENUATION RATE IN A HOMOGENEOUS MEDIUM AT 300 KHz | | |
|---|---|---|
| Conductivity in $Sm^{-1}$ (mhos/meter) | dB/100 ft. | dB/m |
| $10^{-2}$ (lake water) | 26.48 | 0.8826 |
| $4 \times 10^{-3}$ (schist) | 18.6 | 0.620 |
| $4 \times 10^{-4}$ (coal) | 7.88 | 0.2626 |

The table shows that the attenuation rate in schist should be near Q62 dB/m (18.6 dB/100 ft.). The phase constant may be determined from:

$$\beta = \omega\left[\frac{\mu\epsilon}{2}\left(\sqrt{1 + \left(\frac{\sigma}{\epsilon\omega}\right)^2} + 1\right)\right]^{1/2}. \qquad (11)$$

The wavelength ($\lambda = \frac{2\pi}{\beta}$) and skin depth ($\delta = \frac{1}{\alpha}$) of plane waves propagating in coal and schist mediums are illustrated in Table B.

TABLE B

| WAVELENGTH AND SKIN DEPTH IN A HOMOGENEOUS MEDIUM | | |
| --- | --- | --- |
| Conductivity (mhos/meter) Sm$^{-1}$ | Wavelength ($\lambda$) (meter/feet) | Skin Depth ($\delta$) (meter/feet) |
| $4 \times 10^{-3}$ (schist) $4 \times 10^{-4}$ (coal) | 93.22/305.7 395.2/1296 | 14.2/46.6 33.6/110.2 |

Magnetic field strength ($H_\phi$) measurements are made at various locations in the tunnel. The measurements are made when the transmitting antenna is in drillhole 101. The measurements are made with a tuned loop antenna and portable field strength meter. The antenna output voltage is measured. For example, Table C illustrates the antenna output voltage which is within a constant of the field strength inside a tunnel.

TABLE C

| MEASURED FIELD STRENGTH INSIDE OF TUNNEL (dB re 1 nanovolt) | | | |
| --- | --- | --- | --- |
| Measuring Station | Approximate Distance | | Field Strength Center of Tunnel (dB per nanovolt) |
| | ft. | m | |
| 1 | 300 | 100 | 85.6 |
| 2 | 250 | 75 | 82 |
| 3 | 200 | 60 | 86 |
| 4 | 150 | 45 | 101 |
| 5 | 100 | 30 | 111 |
| 6 | 50 | 15 | 123 |
| 7 | 50 | 15 | 131 |

The measured data ($20 \log_{10} H_\phi$) was plotted in Fig. 8 (long dash-dot curve). Assuming farfield radiation conditions, the measured data should correspond to the logarithmic form of equation 4 given by:

$$20 \log_{10} H_\phi = 20 \log_{10} \left[ \frac{ce^{-\alpha r}}{r} \right]$$

$$(12)$$

$$= 20 \log_{10} c^{-\alpha r} - 20 \log_{10} r.$$

Two additional curves are constructed in Fig. 8 to enable the determination of c and $\alpha$ from the measured data. The upper curve (plus-dash) was constructed by adding the spherical spreading factor ($20 \log_{10} r$) to each measured data point. The constructed curve should be linear for measurements made in excess of:

$$r > \frac{\lambda}{2\pi} = \frac{305.7}{6.28} = 48.67'$$

$$(13)$$

$$= 14.6 \text{ m}$$

from the radiating antenna.

14

The constructed line is approximately linear with a slope of 0.62 dB/m (16.8 dB (100 ft.) when r >0.3 m (100'). This seems to confirm strong spherical spreading of the RIM image signal in the schist medium. The measured attenuation rate is in agreement with the expected schist attenuation rate given in Table A. The constant factor is seen to have a value of 185.0 dB above one nanovolt.

In the homogenous schist medium, the constant c may be analytically determined by substituting equation 12 into the bracket term in equation 10. The antenna coupling constant is mathematically represented by:

$$c = \frac{M\mu_o \sigma f}{4} \quad ; \quad \sigma > \omega\varepsilon \qquad (14)$$

where $\sigma$ is the conductivity of the medium;

$\mu_o$ is the magnetic permeability;

$\varepsilon$ is the permitivity; and

f is the frequency of the imaging signal.

In non-magnetic rocks, the magnetic permeability remains constant at the free space value of $4\pi \times$ E-07. The imaging signal frequency (f) and the antenna magnetic moment (M) are also constants. The coupling constant is directly proportional to the conductivity ($\sigma$) of the schist medium. It can also be shown that the constant depends upon the inverse square of the signal wavelength in the mediums. The wavelength ratio relative to a coal medium is given by

k = 395m/93m = 4.24. This would produce a

$20\log_{10}k$ = 25.12 dB increase relative to that found in a coal seam. The measured c value in coal is 160; therefore, an expectation of 185 is in close agreement with the measured schist value.

Vertical imaging, i.e. measuring attenuation rates in a vertical plane, as taught herein allows for the vertical reconstruction of tomography images of faults. This is also an important discovery for hard rock mining since chemical mineralization occurs in these areas in a subterranean environment.

The vertical imaging method may also be applied to gas and oil reservoir analysis. As illustrated in Fig. 13, since the conductivity of a sand reservoir decreases when the communicating pores are filled with oil or natural gas and increases when filled with water, the conductivity contrasts between the petroleum reservoir and water reservoir cause the attenuation and phase shift rates to marketly change the ray paths intersecting different mediums.

## Claims

1.  A method for imaging geologic anomalies in a vertical plane in underground geological formations comprising:

    drilling a plurality of downholes (101, 102) about said formation (100) and at locations remote from each other;

    placing within a first (101) of said downholes a transmitter (20, 31) having continuous wave transmit capabilities in a medium frequency range of approximately 100 KHz to approximately 800 KHz, the transmitter (20, 31) including a short magnetic dipole antenna (21, 48) for progagation of the waves through said formation (100);

    placing within a second (102) of said downholes a receiver (10, 32) having continuous wave receive capabilities in a medium frequency range of approximately 100 KHz to approximately 800 KHz, the receiver (10, 32) including a vertical tuned resonant loop antenna (11, 48) for receiving waves propagated by said transmitter (20, 31), said receiver further including measuring and recording means (13, 14) for measuring and recording a plurality of characteristics of said received propagated waves;

    successively changing the elevation of said transmitter (20, 31) in said first hole (101) to different transmitter stations (106);

    at each transmitter station (106), transmitting a plurality of transmissions of said continuous wave medium frequency waves with spherical spreading and an azimuthal magnetic field component ($H_\phi$) propagated toward and received by said receiver antenna (11, 48);

    measuring a plurality of signal transmission characteristics of the received azimuthal magnetic field components ($H_\phi$);

    calculating a plurality of expected signal transmission characteristics of signals propagated through said formation (100); and

comparing said calculated signal transmission characteristics with said measured signal transmission characteristics and generating, by tomography reconstruction, geographical representation of said vertical formation (100) therefrom.

2. The method of claim 1 including the further step of

with said transmitter (20, 31) at each transmitter station (106), successively changing the elevation of said receiver (10, 32) in said second hole (102) to different receiver stations (108).

3. The method of claim 1 including the further step of

predeteriming the distance between each transmitter station (106) and successively moving said transmitter (20, 31) to said predetermined transmitter stations (106).

4. The method of claim 2 or 3 including the further step of

predetermining the distance between each receiver station (108) and successively moving said receiver (10, 32) to said predetermined receiver stations (108).

5. The method of claim 1 including the further steps of

with said transmitter (20, 31) at each transmitter station (106), successively changing in increments the elevation of each of said receiver (10, 32) in said second hole (102) to different receiver stations.

6. The method of claim 5 wherein

each increment of change of the transmitter (20, 31) is substantially equal to each increment of change of the receiver (10, 32).

7. The method of claim 2 including the further steps of

removing the transmitter from the first (101) of said downholes;

placing the transmitter (20, 31) within a third (112) of said downholes and successively changing the elevation of said transmitter (20, 31) in said third hole (112) to different transmitter stations;

at each transmitter station within said third hole (112), transmitting a plurality of transmissions of continuous wave medium frequency waves with an azimuthal magnetic field component ($H_\phi$) propagated toward and received by said receiver antenna (11, 48);

measuring a plurality of signal transmission characteristics of the received azimuthal magnetic field components ($H_\phi$);

calculating a plurality of expected signal transmission characteristics of signals propagated through said formation; and

comparing said calculated signal transmission characteristics with said measured signal transmission characteristics and generating, by tomography reconstruction, a geographical representation of said vertical formation.

8. The method of any of claims 1 to 7 wherein said short magnetic dipole antenna is a vertical tuned resonant loop antenna (48).

**Revendications**

1. Procédé pour former des images d'anomalies géologiques dans un plan vertical dans des formations géologiques souterraines, consistant :

à forer plusieurs trous (101, 102) autour de ladite formation (100) et en des emplacements éloignés les uns des autres ;

à placer dans un premier (101) desdits trous un émetteur (20, 31) ayant des possibilités d'émission d'ondes continues dans une bande de fréquences moyenne d'environ 100 kHz à environ 800 kHz, l'émetteur (20, 31) comprenant une courte antenne dipôle magnétique (21, 48) pour la propagation des ondes à travers ladite formation (100) ;

à placer dans un second (102) desdits trous un récepteur (10, 32) ayant des possibilités de réception d'ondes continuez dans une bande de fréquences moyenne d'environ 100 kHz à environ 800 kHz, le récepteur (10, 32) comprenant une antenne à boucle résonnante accordée verticale (11, 48) pour la réception d'ondes propagées par ledit émetteur (20, 31), ledit récepteur comprenant en outre des moyens (13, 14) de mesure et d'enregistrement destinés à mesurer et à enregistrer plusieurs

EP 0 250 986 B1

caractéristiques desdites ondes propagées reçues ;

à modifier successivement la hauteur dudit émetteur (20, 31) dans ledit premier trou (101) à des stations d'émetteurs différentes (106) ;

à chaque station d'émetteur (106), à émettre plusieurs émissions desdites ondes continues de fréquence moyenne avec un étalement sphérique et une composante azimutale ($H_\phi$) de champ magnétique propagée vers et reçue par ladite antenne (11, 48) de récepteur ;

à mesurer plusieurs caractéristiques d'émission de signaux des composantes de champ magnétique azimutales reçues ($H_\phi$) ;

à calculer plusieurs caractéristiques prévues d'émission de signaux propagés à travers ladite formation (100) ; et

à comparer lesdites caractéristiques calculées d'émission de signaux auxdites caractéristiques mesurées d'émission de signaux et à générer, d'après cette comparaison, par reconstruction tomographique, une représentation géographique de ladite formation verticale (100).

2. Procédé selon la revendication 1, comprenant en outre l'étape qui consiste, avec ledit émetteur (20, 31) à chaque station d'émetteur (106), à modifier successivement l'élévation dudit récepteur (10, 32) dans ledit second trou (102) à des stations de récepteurs différentes (108).

3. Procédé selon la revendication 1, comprenant en outre l'étape qui consiste

à prédéterminer la distance entre toutes les stations d'émetteurs (106) et à déplacer successivement ledit émetteur (20, 31) vers lesdites stations d'émetteurs prédéterminées (106).

4. Procédé selon la revendication 2 ou 3, comprenant en outre l'étape qui consiste

à prédéterminer la distance entre toutes les stations de récepteurs (108) et à amener successivement ledit récepteur (10, 32) dans lesdites stations de récepteurs prédéterminées (108).

5. Procédé selon la revendication 1, comprenant en outre les étapes qui consistent, avec ledit émetteur (20, 21) à chaque station d'émetteur (106), à amener successivement par incréments l'élévation de chacun desdits récepteurs (10, 32) dans ledit second trou (102) à des stations de récepteurs différentes.

6. Procédé selon la revendication 5, dans lequel chaque incrément de changement de l'émetteur (20, 31) est sensiblement égal à chaque incrément de changement du récepteur (10, 32).

7. Procédé selon la revendication 2, comprenant en outre les étapes qui consistent à enlever l'émetteur du premier (101) desdits trous ;

à placer l'émetteur (20, 31) dans un troisième (112) desdits trous et à changer successivement l'élévation dudit émetteur (20, 31) dans ledit troisième trou (112) pour l'amener à des stations d'émetteurs différentes ;

à chaque station d'émetteur à l'intérieur dudit troisième trou (112), à émettre plusieurs émissions d'ondes de fréquence moyenne en ondes continues avec une composante azimutale ($H_\phi$) de champ magnétique propagée vers et reçue par ladite antenne (11, 48) de récepteur ;

à mesurer plusieurs caractéristiques de transmission de signaux des composantes azimutales reçues ($H_\phi$) de champ magnétique ;

à calculer plusieurs caractéristiques prévues de transmission de signaux propagés à travers ladite formation ; et

à comparer lesdites caractéristiques calculées de transmission de signaux auxdites caractéristiques mesurées de transmission de signaux et à générer, par reconstruction tomographique, une représentation géographique de ladite formation verticale.

8. Procédé selon l'une quelconque des revendications 1 à 7, dans lequel ladite antenne dipôle magnétique courte est une antenne à boucle résonnante accordée verticale (48).

## Patentansprüche

1. Verfahren zur bildlichen Darstellung von geologischen Anomalien in einer vertikalen Ebene in geologischen Untergrund-Formationen, mit folgenden Merkmalen:

es wird eine Mehrzahl von Bohrlöchern (101, 102) um die Formation (100) und an voneinander

17

entfernten Stellen niedergebracht,

in ein erstes (101) der Bohrlöcher wird ein Sender (20, 31) mit Einrichtungen zur kontinuierlichen Wellenübertragung in einem mittleren Frequenzbereich von ungefähr 100 bis undgefähr 800 kHz angeordnet, wobei der Sender (20, 31) eine kurze magnetische Dipolantenne (21, 48) zur Fortpflanzung der Wellen durch die Formation (100) aufweist;

in einem zweiten (102) der Bohrlöcher wird ein Empfänger (10, 32) mit Einrichtungen zum kontinuierlichen Wellenempfang im mittleren Frequenzbereich von ungefähr 100 bis ungefähr 800 kHz angeordnet, wobei der Empfänger (10, 32) eine vertikale, abgestimmte resonante Rahmenantenne (11, 48) zum Empfang der von dem Sender (20, 31) übertragenen Wellen aufweist und der Empfänger ferner Meß- und Aufzeichnungseinrichtungen (13, 14) zur Messung und Empfang einer Mehrzahl von Charakteristiken der empfangenen und übertragenen Wellen umfaßt;

die Höhenlage des Senders (20, 31) in dem ersten Bohrloch (101) wird aufeinanderfolgend auf unterschiedliche Sendestationen (106) verändert;

bei jeder Sendestation (106) wird eine Mehrzahl von Übertragungen der kontinuierlichen Welle mittlerer Frequenz mit sphärischer Ausbreitung und einer azimutalen magnetischen Feldkomponente ($H_\phi$) vorgenommen, die sich in Richtung auf die Empfangsantenne (11, 48) fortpflanzt und dort empfangen wird;

eine Mehrzahl von Signalübertragungscharakteristiken der empfangenen azimutalen magnetischen Feldkomponente ($H_\phi$) wird gemessen;

eine Mehrzahl von erwarteten Signalübertragungscharakteristiken der sich durch die Formation (100) fortpflanzenden Signale wird errechnet;

die errechneten Signalübertragungscharakteristiken werden mit den gemessenen Signalübertragungscharakteristiken verglichen und durch tomographische Rekonstruktion wird eine geographische Darstellung der vertikalen Formation (100) erzeugt.

2. Verfahren nach Anspruch 1, mit folgendem weiteren Schritt:

mit dem Sender (20, 31) in jeder Sendestation (106) wird aufeinanderfolgend die Höhenlage des Empfängers (10, 32) in dem zweiten Bohrloch (102) entsprechend unterschiedlicher Empfangsstationen (108) geändert.

3. Verfahren nach Anspruch 1, mit folgendem weiteren Schritt:

der Abstand zwischen jeder Sendestation (106) wird vorher bestimmt und der Sender (20, 31) wird auf die vorbestimmten Sendestationen (106) aufeinfolgend verschoben.

4. Verfahren nach Anspruch 2 oder 3, mit folgendem weiteren Schritt:

der Abstand zwischen jeder Empfangsstation (108) wird vorherbestimmt und der Empfänger (10, 32) wird auf die vorbestimmten Empfangsstationen (108) aufeinanderfolgend verschoben.

5. Verfahren nach Anspruch 1, mit folgendem weiteren Schritt:

mit dem Sender (20, 31) in jeder Sendestation (106) wird die Höhenlage jedes der Empfänger (10, 32) in dem zweiten Bohrloch (102) im Sinne unterschiedlicher Empfangsstationen geändert.

6. Verfahren nach Anspruch 5,

dadurch gekennzeichnet, daß jeder Veränderungsschritt des Senders (20, 31) im wesentlichen gleich jedem Veränderungsschritt des Empfängers (10, 32) ist.

7. Verfahren nach Anspruch 2, mit folgenden zusätzlichen Schritten:

der Sender wird aus der ersten (101) der Bohrungen entfernt;

der Sender (20, 31) wird in ein drittes (112) der Bohrlöcher verbracht und nachfolgend wird die Höhenlage des Senders (20, 31) in dem dritten Bohrloch (112) im Hinblick auf unterschiedliche Sendestationen aufeinfolgend geändert;

bei jeder Sendestation innerhalb des dritten Bohrlochs (112) wird eine Mehrzahl von Sendungen einer kontinuierlichen Welle mittlerer Frequenz mit einer azimutalen magnetischen Feldkomponente ($H_\phi$) zur Empfangsantenne (11, 48) übertragen und von dieser empfangen.;

eine Mehrzahl von Signalübertragungscharakteristiken der empfangenen azimutalen magnetischen Feldkomponente ($H_\phi$) wird gemessen;

eine Mehrsahl von erwarteten Signalübertragungscharakteristiken der sich durch die Formation fortpflanzenden Signale wird gemessen;

die errechneten Signalübertragungscharakteristiken werden mit den gemessenen Signalübertragungscharakteristiken verglichen und durch tomographische Rekonstruktion wird eine geographische Darstellung der vertikalen Formation erzeugt.

8. Verfahren nach einem der Ansprüche 1 bis 7, dadurch gekennzeichnet, daß die kurze magnetische Dipolantenne eine vertikale, abgestimmte, resonante Rahmenantenne (48) ist.

*Fig_1*

*Fig_2*

*Fig_3a*

*Fig_3*

**DOWNHOLE TRANSMITTER**

**DOWNHOLE RECEIVER**

*Fig_4*

*Fig_6*

Fig_5

Fig_7

Fig_8

Fig_9

23

Fig.10A

Fig.10B

**Fig_11**

**Fig_12**